# EUROPÄISCHE PATENTSCHRIFT

(11) **EP 2 462 269 B1**
(45) Veröffentlichungstag und Bekanntmachung des Hinweises auf die Patenterteilung: **09.10.2013**
(21) Anmeldenummer: 10739844.8
(22) Anmeldetag: 01.07.2010
(51) Int. Cl.: D04H 18/04

(54) **VERSORGUNGSEINRICHTUNG ZUM BETREIBEN EINER WASSERSTRAHL-VERNADELUNGSANLAGE**
SUPPLY DEVICE FOR OPERATING A WATER-JET NEEDLING SYSTEM
DISPOSITIF D'ALIMENTATION POUR FAIRE FONCTIONNER UNE INSTALLATION D'AIGUILLETAGE PAR JETS D'EAU

(30) Priorität: 06.08.2009 DE 102009036296
(43) Veröffentlichungstag der Anmeldung: 13.06.2012
(73) Patentinhaber: Trützschler Nonwovens & Man-Made Fibers GmbH, 63329 Egelsbach (DE)
(72) Erfinder: ZENKER, Dieter, 50735 Köln (DE)
(74) Vertreter: von Kreisler Selting Werner
(86) Internationale Anmeldenummer: PCT/DE2010/000761
(87) Internationale Veröffentlichungsnummer: WO 2011/015172

(56) Entgegenhaltungen:
- DE-A1- 10 306 333
- DE-A1-102005 018 017
- DE-A1-102007 010 911
- DE-B3- 10 019 342
- JP-A- 2008 188 578
- US-A1- 2007 138 081

## Beschreibung

Die Erfindung betrifft eine Versorgungseinrichtung zum Betreiben einer Wasserstrahlvernadelungsanlage nach dem Oberbegriff von Anspruch 1.

Die DE 10 2005 055 939 B3 zeigt einen Düsenbalken zur Erzeugung von Fluidstrahlen, welche der Verfestigung einer Faserbahn dienen. Der Düsenstreifen enthält einen auswechselbaren Düsenstreifen, der die Austrittsöffnungen für das Fluid enthält. Die Austrittsöffnungen können in einer Reihe, aber auch in zwei oder mehreren Reihen parallel zueinander angeordnet sein. Die Austrittsöffnungen haben einen Abstand zueinander sowie Durchmesser, welche sich nach dem Einsatzzweck richten. Als Fluid wird unter Druck stehendes Wasser verwendet.

Aus der US 3 508 308 sowie der DE 1 635 577 A1 sind Einrichtungen zur Wasserstrahlvernadelung bekannt, welche jeweils eine Wasseraufbereitung in Form von einem Wassertank sowie einer Hochdruckpumpe aufweisen.

Die Erfindung geht somit aus von einer Versorgungseinrichtung zum Betreiben einer Wasserstrahlvernadelungsanlage, wobei mittels der Wasserstrahlvernadelungsanlage eine geförderte Materialbahn über einen Düsenbalken mit unter Druck stehendem Wasser beaufschlagt und das durch die Materialbahn gestrahlte Wasser in einer Absaugung aufgefangen wird,
wobei die Versorgungseinrichtung Komponenten zur Wasseraufbereitung umfasst, wie insbesondere:
- einen der Absaugung nachgeschalteten Wasserabscheider,
- eine Filtration,
- eine Frischwasserzufuhr,
- wenigstens eine Pumpe.

Aufgabe der vorliegenden Erfindung ist es, eine Vorrichtung nach dem Oberbegriff von Anspruch 1 insbesondere mit Blick auf eine einfache Installation der Komponenten zu verbessern.

Gelöst wird diese Aufgabe durch die Merkmale des Vorrichtungsanspruches. Vorteilhafte Weiterbildungen der Erfindung ergeben sich aus den Unteransprüchen.

Nach der Erfindung ist vorgesehen, dass die Komponenten in funktionsfähiger Weise miteinander verbunden und zu einer transportfähigen Einheit montiert sind. Die Einheit weist Anschlüsse zur Verbindung der Komponenten mit der Wasserstrahlvemadelungsanlage auf.

Als bevorzugte Weiterbildung sind folgende Maßnahmen vorgesehen:
- die transportfähige Einheit umfasst neben den Komponenten Wasserabscheider, Filtration, Frischwasserzufuhr und Förderpumpen eine Hochdruckpumpe zur Versorgung des Düsenbalkens mit Druckwasser.
- die transportfähige Einheit umfasst neben den Komponenten Wasserabscheider, Filtration, Frischwasserzufuhr, Förderpumpen eine dem Düsenbalken vorgeordnete Filtereinheit (Polizeifilter).
- die transportfähige Einheit umfasst neben den Komponenten Wasserabscheider, Filtration, Frischwasserzufuhr, Förderpumpen einen dem Wasserabscheider nachgeordneten Ventilator zur Erzeugung eines Unterdruckes in der Absaugung.
- die transportfähige Einheit umfasst eine dem Absaugventilator zugeordnete Schallschutzeinrichtung.
- der Ventilator ist in der transportfähigen Einheit in einer für den Transport vorgesehenen Position fixiert und kann nachträglich woanders aufgestellt werden.
- die transportfähige Einheit umfasst neben den Komponenten Wasserabscheider, Filtration, Frischwasserzufuhr und Förderpumpen wenigstens einen Schaltschrank, in welchem die Einrichtungen zur Steuerung und Bestromung der elektrischen Komponenten der transportfähigen Einheit untergebracht sind.
- der Schaltschrank umfasst Einrichtungen zur Steuerung und Bestromung der Wasserstrahlvernadelungsanlage.
- der Schaltschrank der transportfähigen Einheit ist in einer für den Transport vorgesehenen Position fixiert und kann nachträglich woanders aufgestellt werden.
- die transportfähige Einheit ist als eine Montageplattform ausgebildet, auf der die Komponenten der Wasseraufbereitung und ggf. weitere Komponenten wie Hochdruckpumpe, Absaugventilator, Schaltschrank montiert sind.
- die transportfähige Einheit weist einen elektrischen Anschluss für die Spannungsversorgung der elektrischen Komponenten auf.
- die transportfähige Einheit weist einen Frischwasseranschluss auf.
- die transportfähige Einheit weist für den Absaugventilator einen Abluftauslass zum Anschluss an ein vorhandenes Abluftsystem auf.
- die Montageplattform ist mittels Seitenpfosten und Traversen zu einer transportierbaren Kiste erweitert.
- die Hochdruckpumpe der Wasserversorgung ist auf einer weiteren Montageplattform als separat transportierbare Einheit montiert.
- die Montageplattform weist eine schallisolierte Einhausung für die Hochdruckpumpe auf.
- der Absaugventilator der Wasserversorgung ist auf einer weiteren Montageplattform als separat transportierbare Einheit montiert.
- die Hochdruckpumpe und der Absaugventilator der Wasserversorgung sind auf einer gemeinsamen zusätzlichen Montageplattform als separat transportierbare Einheit montiert.

Bei der erfindungsgemäßen Versorgungseinrichtung ist somit vorgesehen, dass die wesentlichen Komponenten der Wasseraufbereitung wie insbesondere ein der Absaugung nachgeschalteter Wasserabscheider, und/oder eine Filtration und/oder eine Frischwasserzufuhr und/oder eine Pumpe zu einer transportfähigen Einheit montiert und in funktionsfähiger Weise miteinander verbunden sind. Diese Komponenten müssen somit bei der Installation nicht mehr miteinander verbunden und verschaltet werden, was den Montageaufwand reduziert. Auch können die vormontierten Komponenten hinsichtlich ihres Zusammenwirkens bereits getestet und eingestellt/justiert sein, so dass auch derartige Prüf- und Einstellarbeiten am Aufstellort der Anlage entfallen können.

Gemäß einer Ausgestaltung der Erfindung sind in der Versorgungseinrichtung auf einer Montageplattform ein mit der Absaugung zu verbindender Wasserabscheider, ein mit dem Wasserabscheider verbundener Bandfilter, ein Beutelfilter, eine Frischwasserzufuhr sowie in dem beschriebenen System vorzusehende Wassertanks bzw. Auffangsysteme sowie dazwischen befindliche Pumpen vormontiert. Diese Komponenten sind auf der Montageplattform als Transporteinheit montiert, welche bspw. in einen Container verladen werden kann. Diese Plattform wird nach dem Entladen an der vorgesehenen Position aufgestellt und mittels der vorhandenen Anschlüsse an die Anlage zur Wasserstrahlvernadelung sowie weitere, noch vorzusehende Komponenten geschaltet. Das durch die Versorgungseinrichtung aufbereitete Wasser wird durch einen Anschluss mit einer vorhandenen Hochdruckpumpe verbunden, durch welchen der oder die Düsenbalken der Anlage mit Druckwasser versorgt werden. Weiterhin ist noch ein Anschluss an das Frischwasser (bereitzustellen ist enthärtetes Wasser) sowie ein Anschluss an des Stromnetz zu realisieren.

Die zuvor beschriebene Ausführungsform enthält vormontiert einen mit der Absaugung über einen Anschluss zu verbindenden Wasserabscheider, einen mit dem Wasserabscheider verbundenen Bandfilter, einen Beutelfilter, eine Frischwasserzufuhr (Anschluss für Frischwasser sowie ein dieses aufnehmender und mit durch den Bandfilter gereinigten Wasser vermischender Tank), in dem beschriebenen System vorzusehende Wassertanks bzw. Auffangsysteme sowie dazwischen befindliche Pumpen. Weiterhin kann auf der diese Komponenten aufnehmenden Plattform auch ein dem Wasserabscheider zugeordneter und mit dieser verbundener Absaugventilator montiert sein. Vorzugsweise enthält dieser bereits Komponenten zur Schalldämmung bzw. der Ventilator ist bereits in einem schallisolierten Bereich (Einhausung, Gehäuse) auf der Montageplattform montiert.

Weiterhin ist es ebenfalls möglich, dass auf der Montageplattform bereits die Hochdruckpumpe montiert ist, mittels der das aufbereitete Wasser unter Druck dem oder den Düsenbalken der Anlage zugeführt wird. Vorzugsweise ist die Hochdruckpumpe schallisoliert ausgeführt bzw. in einem schallisolierten Bereich (Einhausung, Gehäuse) auf der Montageplattform montiert. Bei einer derartigen Ausführungsform enthält die Montageplattform bereits die Leitungen zwischen der Wasseraufbereitung und der Hochdruckpumpe. Insbesondere ist der Hochdruckpumpe noch ein Filter (Polizeifilter) nachgeschaltet, so dass der Anschluss an den Düsenbalken der Wasserstrahlvernadelungsanlage nach diesem Filter erfolgt.

Gemäß einer weiteren Ausführungsform der Erfindung ist vorgesehen, dass die Montageplattform bereits einen Schaltschrank zur Aufnahme der elektrischen Komponenten zur Steuerung und Bestromung (Umrichter) der Komponenten der Versorgungseinrichtung aufweist. Entsprechend sind elektrische Anschlüsse zur Verbindung der Versorgungseinrichtung mit der Anlage bzw. der Steuerung der Anlage sowie wenigstens ein Netzanschluss für den Stromanschluss der Versorgungseinrichtung.

Weiterbildend ist vorgesehen, dass die Montageplattform einen schallisolierten bzw. gedämpften Bereich aufweist, in dem der Absaugventilator und die Hochdruckpumpe gemeinsam untergebracht sind. Dieser schallisolierte bzw. gedämpfte Bereich ist vorzugsweise als eine Kammer ausgebildet, in der die Hochdruckpumpe und der Absaugventilator installiert sind.

Eine weitere Ausgestaltung der Erfindung sieht vor, dass bestimmte auf der transportablen Montageplattform befindliche Komponenten wie insbesondere der Absaugventilator, und/oder die Hochdruckpumpe und/oder der Schaltschrank lediglich zum Transport auf dieser montiert sind. Bei der Installation der Versorgungseinrichtung werden die entsprechenden Komponenten dann aus ihrer Montageposition gelöst und an vorgesehenen Orten innerhalb oder außerhalb der Montageplattform montiert. Dies hat den Vorteil, dass bspw. der Absaugventilator in der Nähe eines vorhandenen Abluftschachtes aufgestellt werden kann und gleichzeitig der so auf der Montageplattform gewonnene Raum eine Zugänglichkeit zu den übrigen Komponenten ermöglicht. Es muss dann nach Umstellen des Absaugventilators lediglich eine Saugluftverbindung zu dem Wasserabscheider hergestellt werden.

In gleicher Weise kann die Hochdruckpumpe, bevorzugt untergebracht in einem isolierten Raum (Einhausung), nach Aufstellen der Montageplattform von dieser gelöst und an einem vorgesehenen Ort aufgestellt werden. Auch in dieser Ausgestaltung ist dann nach Umstellen der Hochdruckpumpe lediglich eine Leitungsverbindung zwischen dem letzen Beutelfilter und der Hochdruckpumpe sowie eine weitere Verbindung zwischen Hochdruckpumpe und Düsenbalken herzustellen.

Eine weitere Ausgestaltung der Erfindung sieht vor, dass die Hochdruckpumpe und/oder der Absaugventilator auf einer eigenen Montageplattform montiert sind und so eine weitere Transporteinheit bilden. Nach Aufstellen der Transporteinheit mit den Komponenten der Wasseraufbereitung sowie der Transporteinheit mit Hochdruckpumpe und/oder Absaugventilator werden die nötigen Verbindungen der Komponenten untereinander sowie die Anschlüsse zur Anlage und dem Strom- und Wassemetz hergestellt.

Nach der Erfindung ist allgemein vorgesehen, dass zumindest die wesentlichen Komponenten der Wasseraufbereitung auf einer Montageplattform transportfähig montiert und verschaltet sind. Die Montageplattform kann hierzu einen unterhalb des Bandfilters angeordneten Tank zum Auffangen des gereinigten Wassers in integrierter Bauweise aufweisen. Dieser Tank ist bspw. als ein ausgeformter Bereich der Bodengruppe der Montageplattform ausgebildet. Diese Bodengruppe kann weiterhin Aufnahmen für Pumpen und weitere Filter sowie die zwischen diesen Komponenten verlegten Leitungen aufweisen. Dem Personenschutz dienende Einrichtungen wie Geländer oder Absperrungen sind ebenfalls bereits montiert.

Die Montageplattform ist gemäß einer Ausgestaltung der Erfindung als ein Tragrahmen ausgebildet, welcher eine Bodenplatte trägt. Auf der Bodenplatte sind die Komponenten der Wasseraufbereitung wie Tanks, Filter und Pumpen montiert und miteinander verschaltet. Leitungen (hydraulisch und elektrisch) Leitungen sind in vorgesehenen Kanälen auf oder unterhalb der Bodenplatte verlegt. Der Tragrahmen weist Anlenkungen, bspw. für Ösen auf, an denen diese Versorgungseinheit mittels eines Kran gehoben und von einem Transportfahrzeug abgenommen und am vorgesehenen Aufstellort abgesetzt werden kann. Die Montageplattform bzw. der Montagerahmen wird dann lediglich am Hallenboden fixiert, bevor die Verbindungen zwischen der zu versorgenden Anlage und der Versorgungseinrichtung einerseits und der Versorgungseinheit und dem Wasser- und Stromnetz der Produktionshalle anderseits hergestellt werden. Hierbei zeigt sich eine weiterer Vorteil der Erfindung, nämlich, dass für die einzelnen Komponenten der Versorgungseinrichtung keine Montagefundamente auf dem Hallenboden geschaffen werden müssen.

Die Montageplattform kann zusätzlich vertikale Rahmenteile in Form von Seitenpfosten und Traversen aufweisen und nach Art eines offenen Kastens gestaltet sein. Die Seiten als auch die Decke des Kastens können während des Transports mittels Abdeckungen geschlossen sein, welche nach dem Abstellen der Einheit entfernt werden. Die Seitenpfosten und Traversen können lösbar mit der Montageplattform sowie untereinander verbunden sein und werden nach dem Aufstellen der Plattform entfernt.

Letztlich kann vorgesehen sein, dass die Montageplattform mittels abnehmbarer seiten- und Deckenteile zu einer Kiste, einem Container erweitert wird. Die Seiten- und Deckenteile werden nach dem Abstellen entfernt.

Des Weiteren erfolgt die Erläuterung von Ausführungsbeispielen der Erfindung anhand der Zeichnungen.

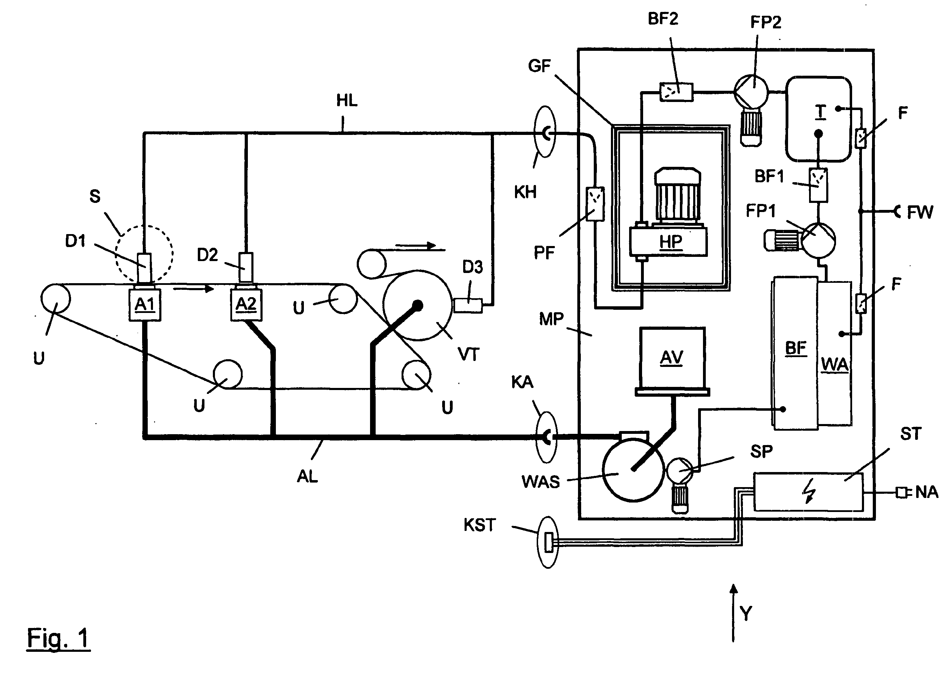

Figur 1 zeigt eine Anlage zur Wasserstrahlvernadelung einer Materialbahn in prinzipieller Form. Eine Materialbahn wird auf einem um Umlenkwalzen U gespannt geführten, endlosen Transportband T abgelegt. Das Transportband T ist als Siebband ausgebildet und läuft in Richtung des Pfeils um. Ein erster Düsenbalken D1 ist in einer drehbaren Siebtrommel S angeordnet und wirkt mit einer unterhalb des Transportbandes T angeordneten Absaugung A1 zusammen. Ein zweiter Düsenbalken D2 ist in Förderrichtung des Transportbandes T dem ersten Düsenbalken D1 nachgeordnet und wirkt mit einer zweiten Absaugung A2 unterhalb des Transportbandes T zusammen. Die durch den ersten Düsenbalken D1 genetzte und dem Zweiten Düsenbalken D2 einseitig vernadelte Materialbahn wird mittels einer Vernadelungstrommel VT vom Transportband T abgenommen und in Pfeilrichtung einer nicht weiter dargestellten Bearbeitungseinrichtung, bspw. einem Trockner, zugeführt. Die Vernadelungstrommel VT weist eine poröse Oberfläche auf und wirkt mit einem dritten Düsenbalken D3 zusammen und ist wie die Absaugungen A1 und A2 unter Saugzug gesetzt. Der Düsenbalken D3 vernadelt die Materialbahn an ihrer Rückseite.

Die Düsenbalken D1 - D3 sind an eine gemeinsame Hochdruckleitung HL geschaltet, welche aufbereitetes Wasser unter hohem Druck bereitstellt. Den Düsenbalken D1 - D3 sind Schaltventile vorgeschaltet, welche nicht dargestellt sind. Dadurch können je nach Produktionsweise einzelne Düsenbalken abgeschaltet werden.

Die Absaugungen A1, A2 sowie das Innere der Vernadelungstrommel VT sind an eine gemeinsame Absaugleitung AL geschaltet. Auch hier können nicht dargestellte Absperrventile zum Abschalten einer oder mehrerer der Absaugungen A1, A2 bzw. der Trommel VT vorgesehen sein.

Auf einer Montageplattform MP, welche als eine mittels Kran oder Gabelhubwagen hebbare Platte ausgebildet ist, sind Komponenten einer Wasseraufbereitung montiert und installiert und bilden so eine transportfähige Einheit. Die auf der Montageplattform in funktionsfähiger Weise montierten und miteinander verschalteten Komponenten sind:
- ein Wasserabscheider WAS,
- ein mit dem Wasserabscheider WAS verbundener Absaugventilator AV,
- eine mit dem Wasserabscheider WAS verbundene Saugpumpe SP,
- ein Bandfilter BF,
- eine das Wasser vom Bandfilter BF aufnehmende Wanne WA,
- eine erste Förderpumpe FP1,
- ein erster Beutelfilter BF1,
- ein Tank T,
- eine zweite Förderpumpe FP2,
- ein zweiter Beutelfilter BF2,
- eine in einer schallisolierten Einhausung (Gehäuse) GH untergebrachte Hochdruckpumpe HP,
- ein der Hochdruckpumpe nachgeschalteter Filter (Polizeifilter) PF,
- eine in einem Schaltschrank untergebrachte Steuerung ST für die Steuerung und Bestromung der Antriebe der Komponenten sowie zur Erfassung von Sensor- und Schaltsignalen.

Die Steuerung ST weist eingangsseitig einen Netzanschluss NA zur Versorgung der Komponenten der Einheit mit Strom. Ausgangsseitig ist die Steuerung ST mit den einzelnen Komponenten, deren Signalgeber und Sensoren verbunden - weiterhin ist ein Anschluss KST vorhanden, mittels dem Steuersignale der Anlage eingelesen werden können. Letztlich werden über diese Schnittstelle auch Steuersignale an die Anlage gesendet.

Die dem Bandfilter BF zugeordnete Wanne WA sowie der Tank T sind über einen Frischwasseranschluss FW und einen Filter F mit enthärtetem Wasser befüllbar. Hierdurch wird der durch die Materialbahn sowie Verdunstung bewirkte Wasserverlust kompensiert - der Wasserstand in der Wanne WA sowie im Tank T werden auf vorgegebene Werte gehalten.

Über eine Anschlusskupplung KH ist der durch den Filter (Polizeifilter) PF gesicherte Ausgang der Hochdruckpumpe mit den Düsenbalken D1, D2, D3 der Anlage verbunden. Über einen weiteren Anschluss KA wird die Absaugleitung AL der Absaugungen A1, A2 und VT mit dem Wasserabscheider WAS verbunden und so von dem elektrisch angetriebenen Absaugventilator AV unter Saugzug gesetzt. Das im Wasserabscheider anfallende Wasser wird mit Faserresten und sonstigen Verunreinigungen über eine Saugpumpe SP einem Bandfilter BF zugeführt, wo eine erste Reinigung des Wassers unter Anwendung von Filtervliesen erfolgt. Das durch den Bandfilter BF gereinigte Wasser wird in einer Wanne WA aufgefangen und von einer Förderpumpe FP1 mit nachgechaltetem Beutelfilter BF1 in einen Tank T gefördert.

Über eine zweite Förderpumpe FP2 mit nachgeschaltetem Beutelfilter BF2 wird das nun mit Frischwasser versetzte Wasser der eingehausten Hochdruckpumpe HP zugeführt und von dort über einen letzten Filter (Polizeifilter) PF und die Hochdruckleitung HL den Düsenbalken D1, D2 und D3 zugeführt.

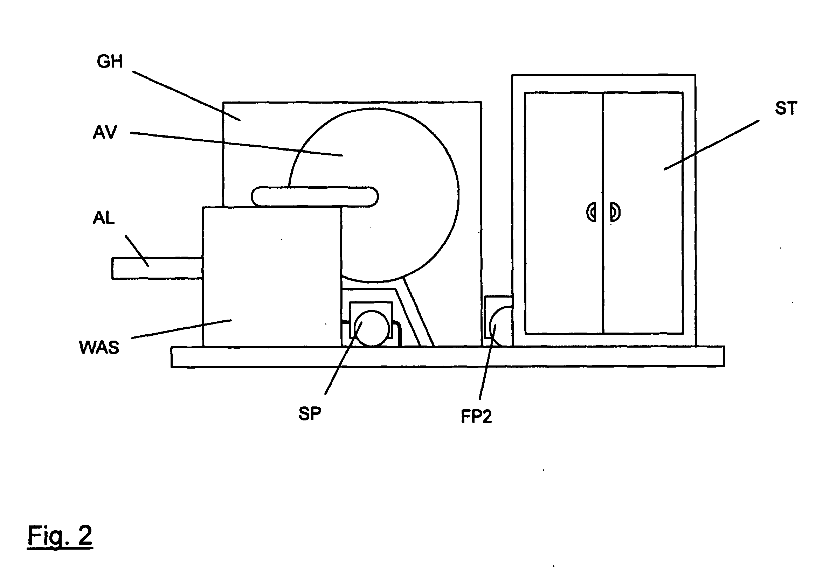

Figur 2 zeigt die Ansicht Y der Versorgungseinheit nach Figur 1.

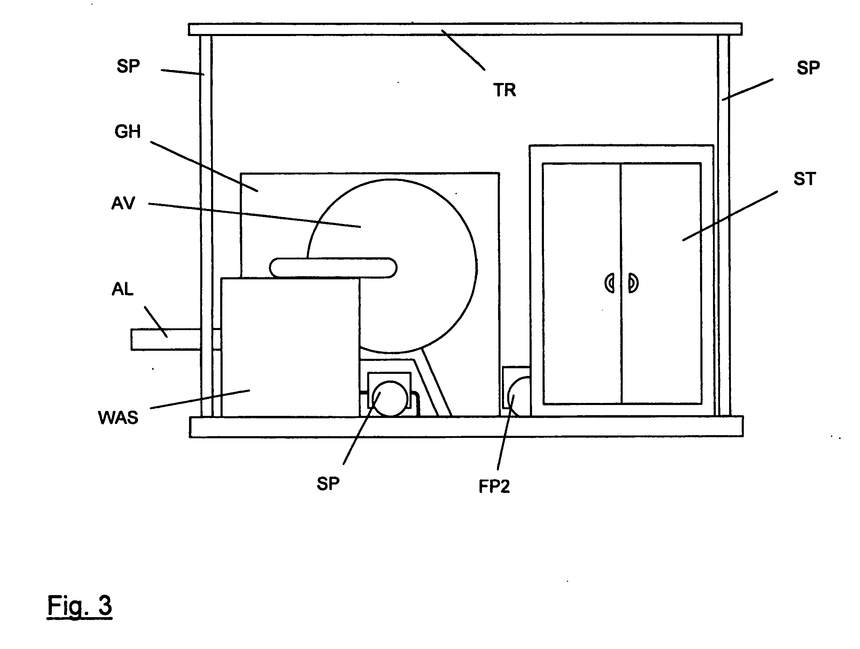

Gemäß Figur 3 ist die Versorgungseinheit nach Figur 1 und 2 zu einem Kasten erweitert, indem die Bodenplatte der Montageplattform MP mittels Seitenpfosten SP und oberen Traversen TR. In die so gebildeten offenen Flächen zwischen den Seitenpfosten SP und Traversen TR sind für den Transport Flächenelement einsetzbar, welche nach dem Aufstellen der Versorgungseinheit entfernt werden.

### Bezugszeichenliste:

- T: Transportband
- U: Umlenkwalze
- S: Siebtrommel
- D1, D2, D3: Düsenbalken
- A1, A2: Absaugung
- VT: Vernadelungstrommel (mit Absaugung)
- HL: Hochdruckleitung
- AL: Absaugleitung
- KH: Anschluss, Anschlusskupplung Hochdruckleitung HL
- KA: Anschluss, Anschlusskupplung Absaugleitung AL
- KST: Anschluss, Anschlusskupplung Steuerung ST
- MP: Montageplattform
- WAS: Wasserabscheider
- SP: Saugpumpe
- BF: Bandfilter
- WA: Wanne
- FP1, FP2: Förderpumpe
- BF1, BF2: Filter, Beutelfilter
- T: Tank
- HP: Hochdruckpumpe
- GH: Gehäuse, Einhausung
- PF: Filter, Polizeifilter
- SP: Seitenpfosten
- TR: Traverse

## Patentansprüche

1. Versorgungseinrichtung zum Betreiben einer Wasserstrahlvemadelungsanlage, wobei mittels der Wasserstrahlvernadelungsanlage eine Materialbahn über einen Düsenbalken mit unter Druck stehendem Wasser beaufschlagt und das durch die Materialbahn gestrahlte Wasser in einer Absaugung aufgefangen wird, wobei die Versorgungseinrichtung Komponenten zur Wasseraufbereitung umfasst, wie insbesondere:
- einen der Absaugung nachgeschalteten Wasserabscheider,
- eine Filtration,
- eine Frischwasserzufuhr,
- eine Pumpe,
**gekennzeichnet durch,**
- die Komponenten (WAS, SP, BF, WA, FP1, BF1, T, FP2, BF2, HP, PF) sind in funktionsfähiger Weise miteinander verbunden und zu einer transportfähigen Einheit montiert.

2. Versorgungseinrichtung nach Anspruch 1,
**gekennzeichnet durch,**
die transportfähige Einheit umfasst eine Hochdruckpumpe (HP) zur Versorgung eines Düsenbalkens (D1, D2, D3) der Wasserstrahlvernadelungsanlage mit Druckwasser.

3. Versorgungseinrichtung nach Anspruch 1 oder 2,
**gekennzeichnet durch,**
die transportfähige Einheit umfasst eine dem Düsenbalken (D1, D2, D3) vorgeordnete Filtereinheit (PF).

4. Versorgungseinrichtung nach Anspruch 1, 2 oder 3,
**gekennzeichnet durch,**
die transportfähige Einheit umfasst einen dem Wasserabscheider (WAS) nachgeordneten Absaugventilator (AV) zur Erzeugung eines Unterdruckes in der Absaugung (A1, A2, VT) der Wasserstrahlvemadelungsanlage.

5. Versorgungseinrichtung nach Anspruch 4,
**gekennzeichnet durch,**
die transportfähige Einheit umfasst eine dem Absaugventilator (AV) zugeordnete Schallschutzeinrichtung.

6. Versorgungseinrichtung nach Anspruch 4 oder 5,
**gekennzeichnet durch,**
der Absaugventilator (AV) der transportfähigen Einheit ist in einer für den Transport vorgesehenen Position fixiert.

7. Versorgungseinrichtung nach einem der vorhergehenden Ansprüche,
**gekennzeichnet durch,**
die transportfähige Einheit umfasst zusätzlich wenigstens einen Schaltschrank (ST), in welchem die Einrichtungen zur Steuerung und Bestromung der elektrischen Komponenten der transportfähigen Einheit untergebracht sind.

8. Versorgungseinrichtung nach einem der vorhergehenden Ansprüche,
**gekennzeichnet durch,**
der Schaltschrank (ST) umfasst Einrichtungen zur Steuerung und Bestromung der Wasserstrahlvernadelungsanlage.

9. Versorgungseinrichtung nach Anspruch 7 oder 8,
**gekennzeichnet durch,**
der Schaltschrank (ST) der transportfähigen Einheit ist in einer für den Transport vorgesehenen Position fixiert.

10. Versorgungseinrichtung nach einem der vorhergehenden Ansprüche,
**gekennzeichnet durch,**
die transportfähige Einheit ist als eine Montageplattform (MP) ausgebildet, auf der die Komponenten (WAS, SP, BF, WA, FP1, BF1, T, FP2, BF2, HP, PF) montiert sind.

11. Versorgungseinrichtung nach einem der vorhergehenden Ansprüche,
**gekennzeichnet durch,**
die transportfähige Einheit weist einen elektrischen Anschluss (NA) für die Spannungsversorgung der elektrischen Komponenten auf.

12. Versorgungseinrichtung nach einem der vorhergehenden Ansprüche,
**gekennzeichnet durch,**
die transportfähige Einheit weist einen Frischwasseranschluss (FW) auf.

13. Versorgungseinrichtung nach einem der vorhergehenden Ansprüche,
**gekennzeichnet durch,**
die transportfähige Einheit weist für den Absaugventilator (AV) einen Abluftauslass zum Anschluss an ein vorhandenes Abluftsystem auf.

14. Versorgungseinrichtung nach Anspruch 10,
**gekennzeichnet durch,** die Montageplattform (MP) ist mittels Seitenpfosten und Traversen zu einer transportierbaren Kiste erweitert.

## Claims

1. Supply device for operating a water-jet needling system, wherein the water-jet needling system is used to apply water under pressure onto a material web via a nozzle beam and the water jetted through the material web is collected in a suctioning means, wherein the supply device comprises components for water treatment such as in particular
- a water separator arranged downstream of the suctioning means,
- a filtration means,
- a fresh-water supply,
- a pump,
**characterized in that**
- the components (WAS, SP, BF, WA, FP1, BF1, T, FP2, BF2, HP, PF) are connected with each other in operative manner and are assembled to form a transportable unit.

2. Supply device of claim 1, **characterized in that** the transportable unit comprises a high-pressure pump (HP) for supplying a nozzle beam (D1, D2, D3) of the water-jet needling system with water under pressure.

3. Supply device of claim 1 or 2, **characterized in that** the transportable unit comprises a filter unit (PF) arranged upstream of the nozzle beam (D1, D2, D3).

4. Supply device of claim 1, 2 or 3, **characterized in that** the transportable unit comprises an exhaust fan (AV) arranged downstream of the water separator (WAS) for generating a vacuum in the suctioning means (A1, A2, VT) of the water-jet needling system.

5. Supply device of claim 4, **characterized in that** the transportable unit comprises a noise insulation means associated with the exhaust fan (AV).

6. Supply device of claim 4 or 5, **characterized in that** the exhaust fan (AV) of the transportable unit is fixed in a position intended for transport.

7. Supply device of one of the preceding claims, **characterized in that** the transportable unit additionally comprises at least one control cabinet (ST) in which the means for controlling and energizing the electric components of the transportable unit are housed.

8. Supply device of one of the preceding claims, **characterized in that** the control cabinet (ST) comprises means for controlling and energizing the water-jet needling system.

9. Supply device of claim 7 or 8, **characterized in that** the control cabinet (ST) of the transportable unit is fixed in a position intended for transport.

10. Supply device of one of the preceding claims, **characterized in that** the transportable unit is designed as an assembly platform (MP) on which the components (WAS, SP, BF, WA, FP1, BF1, T, FP2, BF2, HP, PF) are mounted.

11. Supply device of one of the preceding claims, **characterized in that** the transportable unit comprises an electric connection (NA) for the voltage supply to the electric components.

12. Supply device of one of the preceding claims, **characterized in that** the transportable unit comprises a fresh-water connection (FW).

13. Supply device of one of the preceding claims, **characterized in that** the transportable unit comprises an exhaust air outlet for the exhaust fan (AV), the outlet being provided for connection with an existing exhaust air system.

14. Supply device of claim 10, **characterized in that** the assembly platform (MP) is expanded by means of lateral posts and crossbars to form a transportable container.

## Revendications

1. Dispositif d'alimentation servant à faire fonctionner une installation d'aiguilletage par jets d'eau, sachant qu'au moyen de ladite installation d'aiguilletage par jets d'eau, une bande de matériau est soumise à l'action d'eau sous pression par l'intermédiaire d'une barre de pulvérisation et que l'eau pulvérisée à travers la bande de matériau est collectée dans un système d'aspiration, sachant que le dispositif d'alimentation comprend des composants servant à la préparation de l'eau, tels que notamment :
- un séparateur d'eau installé en aval du système d'aspiration,
- un système de filtration,
- une arrivée d'eau fraîche,
- une pompe,
**caractérisé en ce**
- **que** les composants (WAS, SP, BF, WA, FP1, BF1, T, FP2, BF2, HP, PF) sont reliés les uns aux autres de manière à pouvoir fonctionner et sont assemblées pour former une unité transportable.

2. Dispositif d'alimentation selon la revendication 1,
**caractérisé en ce**
**que** l'unité transportable comprend une pompe haute pression (HP) servant à alimenter en eau sous pression une barre de pulvérisation (D1, D2, D3) de l'installation d'aiguilletage par jets d'eau.

3. Dispositif d'alimentation selon la revendication 1 ou 2,
**caractérisé en ce**
**que** l'unité transportable comprend une unité de filtrage (PF) installée en amont de la barre de pulvérisation (D1, D2, D3).

4. Dispositif d'alimentation selon la revendication 1, 2 ou 3,
**caractérisé en ce**
**que** l'unité transportable comprend un ventilateur d'aspiration (AV) disposé en aval du séparateur d'eau (WAS) et servant à produire une dépression dans le système d'aspiration (A1, A2, VT) de l'installation d'aiguilletage par jets d'eau.

5. Dispositif d'alimentation selon la revendication 4,
**caractérisé en ce**
**que** l'unité transportable comprend un dispositif antibruit associé au ventilateur d'aspiration (AV).

6. Dispositif d'alimentation selon la revendication 4 ou 5,
**caractérisé en ce**
**que** le ventilateur d'aspiration (AV) de l'unité transportable est fixé dans une position prévue pour le transport.

7. Dispositif d'alimentation selon l'une quelconque des revendications précédentes,
**caractérisé en ce**
**que** l'unité transportable comprend en outre au moins une armoire électrique (ST), laquelle loge les dispositifs de commande et d'alimentation en électricité des composants électriques de l'unité transportable.

8. Dispositif d'alimentation selon l'une quelconque des revendications précédentes,
**caractérisé en ce**
**que** l'armoire électrique (ST) comprend des dispositifs de commande et d'alimentation en électricité de l'installation d'aiguilletage par jets d'eau.

9. Dispositif d'alimentation selon la revendication 7 ou 8,
**caractérisé en ce**
**que** l'armoire électrique (ST) de l'unité transportable est fixée dans une position prévue pour le transport.

10. Dispositif d'alimentation selon l'une quelconque des revendications précédentes,
**caractérisé en ce**
**que** l'unité transportable est réalisée sous la forme d'une plate-forme de montage (MP), sur laquelle sont montés les composants (WAS, SP, BF, WA, FP1, BF1, T, FP2, BF2, HP, PF).

11. Dispositif d'alimentation selon l'une quelconque des revendications précédentes,
**caractérisé en ce**
**que** l'unité transportable présente un raccordement électrique (NA) pour l'alimentation en tension des composants électriques.

12. Dispositif d'alimentation selon l'une quelconque des revendications précédentes,
**caractérisé en ce**
**que** l'unité transportable présente un raccordement en eau fraîche (FW).

13. Dispositif d'alimentation selon l'une quelconque des revendications précédentes,
**caractérisé en ce**
**que** l'unité transportable présente pour le ventilateur d'aspiration (AV) une sortie d'évacuation d'air d'échappement destinée à être raccordée à un système d'évacuation d'air d'échappement présent.

14. Dispositif d'alimentation selon la revendication 10,
**caractérisé en ce**
**que** la plate-forme de montage (MP) est agrandie au moyen de montants latéraux et de traverses pour former une caisse transportable.
